# FASCICULE DE BREVET EUROPEEN

(11) **EP 0 406 140 B1**
(45) Date de publication et mention de la délivrance du brevet: **16.03.1994**
(21) Numéro de dépôt: 90440059.5
(22) Date de dépôt: 28.06.1990
(51) Int. Cl.: A01D 78/10, A01B 23/04

(54) **Machine agricole munie de bras porte-rotors télescopiques**
Landmaschine mit teleskopischen Rotorträgern
Agricultural machine with telescopic rotor-carrying arms

(30) Priorité: 28.06.1989 FR 8908859
(43) Date de publication de la demande: 02.01.1991
(73) Titulaire: KUHN S.A., F-67700 Saverne (FR)
(72) Inventeur: Aron, Jérôme, F-67330 Dossenheim-sur-Zinsel (FR)
(74) Mandataire: Andres, Jean-Claude

(56) Documents cités:
- CH-A- 654 977
- FR-A- 1 352 741
- FR-A- 2 133 976
- FR-A- 2 146 674
- FR-A- 2 199 927
- FR-A- 2 274 210
- FR-A- 2 494 077
- US-A- 1 430 311
- US-A- 3 417 826

## Description

La présente invention concerne une machine agricole comportant notamment un châssis porteur composé d'une structure centrale munie de premières roulettes et de bras téléscopiques qui s'étendent de part et d'autre de ladite structure et dont les longueurs sont définies au moyen de verrous, chacun de ces bras portant à son extrémité la plus éloignée de la structure centrale au moins un rotor d'andainage qui est entraîné en rotation durant le travail autour d'un axe dirigé vers le haut et qui repose sur le sol au moyen de secondes roulettes.

Sur une machine connue de ce genre, chaque bras téléscopique est réalisé en une partie fixe et une partie mobile. Cette dernière peut être déplacée dans différentes positions par rapport à la partie fixe en vue de modifier la distance entre les deux rotors de la machine. Pour cela il faut retirer une broche de verrouillage, tirer manuellement le rotor et la partie mobile vers l'extérieur ou bien les pousser vers l'intérieur et remettre en place la broche de verrouillage.

Ces opérations sont toutefois difficiles à effectuer. Les déplacements relatifs entre les deux parties de chaque bras deviennent rapidement pénibles pour l'opérateur en raison notamment de l'important poids des pièces, des poussières et particules de fourrage qui peuvent s'introduire entre lesdites pièces et/ou de la rouille qui peut s'y former après un certain temps d'utilisation.

En sus, l'ajustement exact entre les deux parties de chaque bras, pour engager la broche de verrouillage dans les trous prévus à cet effet, est très délicat à obtenir.

La machine selon la demande de brevet FR-A-2 274 210 comporte deux rotors portés par un cadre extensible. Celui-ci est réalisé en deux parties télescopiques. La partie mobile de ce cadre peut être déplacée au moyen d'un levier qui est articulé sur cette partie mobile et auquel est lié un bras intermédiaire qui est lui-même articulé sur la partie fixe du cadre. Selon une variante de réalisation, ledit levier est constitué par un étrier de protection. Selon une autre variante de réalisation, le bras intermédiaire peut présenter plusieurs crans pour la liaison avec la partie fixe du cadre. Il est alors possible, en utilisant l'un après l'autre ces crans, d'obtenir pour une même longueur efficace du bras de levier, une distance de déplacement plus grande. En sus, dans le cas de machines plus lourdes, il est possible de raccourcir la longueur efficace du bras de levier dans le but de faciliter la manoeuvre et obtenir, grâce à l'utilisation successive des crans, la distance de déplacement requise de la partie mobile du cadre.

Sur cette machine, l'allongement ou le raccourcissement du cadre doit être effectué manuellement. En sus, un positionnement précis de la partie mobile du cadre et donc de l'entraxe entre les rotors, nécessite des ajustements qui sont délicats à obtenir avec le levier ou l'étrier servant à effectuer la manoeuvre.

La présente invention a notamment pour but de faciliter les opérations à effectuer pour le réglage de la distance entre les deux rotors de la machine.

A cet effet, une importante caractéristique de l'invention consiste en ce que les secondes roulettes de chaque rotor peuvent être orientées et bloquées dans au moins deux positions inclinées de part et d'autre par rapport à la direction d'avancement de la machine et que chaque bras télescopique comporte un sélecteur de plusieurs positions, qui arrête automatiquement l'allongement ou le raccourcissement dudit bras lorqu'il atteint la longueur recherchée.

Grâce à cette caractéristique, le réglage de la distance entre les rotors s'effectue d'une manière automatique. Pour cela, il suffit de déverrouiller la partie mobile de chaque bras télescopique, d'incliner les roulettes des rotors, de positionner le sélecteur de position et de déplacer la machine sur le sol au moyen du tracteur. Dès lors lesdites roulettes guident le rotor correspondant, de telle sorte qu'il se rapproche ou s'éloigne de la structure centrale et entraîne la partie mobile du bras télescopique. La direction de déplacement de chaque rotor et de la partie mobile dépend de l'orientation des roulettes et du sens de déplacement choisis. Ensuite, dès que la position sélectionnée est atteinte, le sélecteur arrête la partie mobile correspondante, ainsi que le rotor qui y est relié. Alors l'opérateur n'a plus qu'à verrouiller les parties mobiles de chaque bras télescopique et à remettre les roulettes dans la position de travail.

D'autres caractéristiques et avantages de l'invention ressortiront des revendications et de la description ci-après d'un exemple de réalisation non limitatif de l'invention, avec référence aux dessins annexés dans lesquels :
- la figure 1 représente une vue de dessus d'une machine selon l'invention en position pour augmenter la distance entre les rotors ;
- la figure 2 représente à plus grande échelle une vue de dessus, avec une coupe partielle, d'un bras portant un rotor ;
- la figure 3 représente une vue de face du bras selon la figure 2.

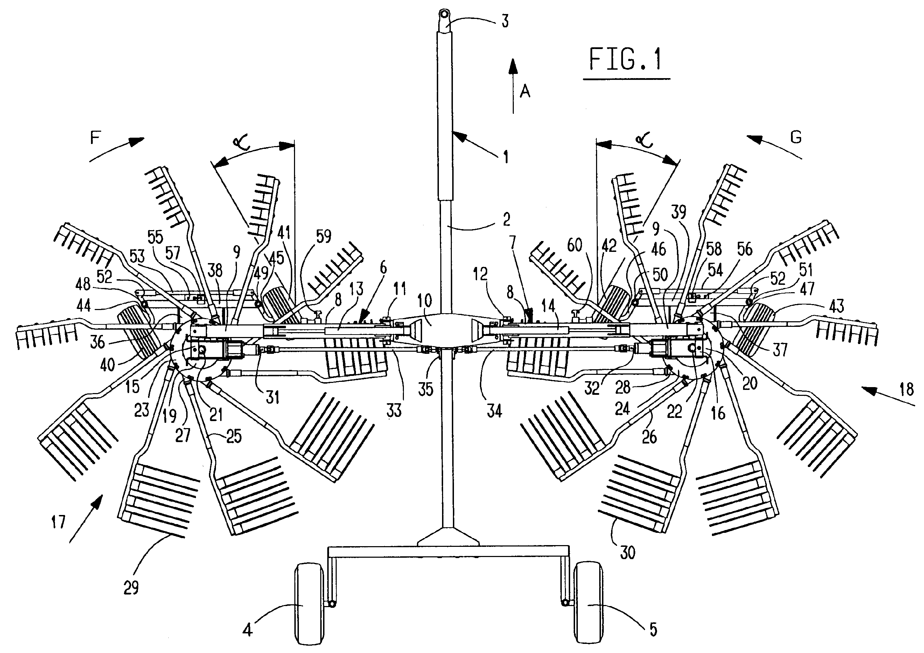

Telle qu'elle est représentée sur la figure 1, la machine selon l'invention comporte un châssis porteur (1) composé essentiellement d'une structure centrale (2) en forme de T. Cette structure présente à sa partie avant un dispositif d'accrochage (3) pour l'accouplement à un tracteur d'entraînement non représenté. A sa partie arrière elle possède deux roulettes porteuses (4 et 5) qui se déplacent sur le sol.

Le châssis (1) comporte également deux bras téléscopiques (6 et 7) qui s'étendent de part et d'autre de la structure (2). Chacun de ces bras est constitué par une partie fixe (8) et une partie mobile (9) emboîtée l'une dans l'autre. Ladite partie fixe (8) est articulée sur des pattes (10) solidaires de la structure (2). Cette articulation est réalisée au moyen d'un axe sensiblement horizontal (11, 12) et sensiblement parallèle à la structure centrale (2). Au-dessus de chaque bras (6, 7) il est en sus prévu un vérin hydraulique (13, 14) lié aux pattes (10) et à la partie fixe (8).

La partie mobile (9) de chaque bras (6, 7) comporte à son extrémité la plus éloignée de la structure centrale (2), un axe (15, 16) sur lequel est articulé un rotor d'andainage (17, 18). Ces axes (15, 16) sont sensiblement parallèles aux axes d'articulation (11, 12) de la partie fixe (8) de chaque bras (6, 7). Chaque rotor (17, 18) se compose essentiellement d'une calotte (19, 20) qui est articulée sur l'axe (15, 16) précité et dans laquelle est logé un axe support (21, 22) sur lequel est guidé en rotation un moyeu ou boîtier (23, 24) portant des bras porte-outils (25, 26). Ces bras (25, 26) sont logés dans des paliers (27, 28) de manière à ce que chacun puisse tourner autour de son axe géométrique longitudinal. Ils portent à leur extrémité la plus éloignée du boîtier (23, 24) des outils de travail (29, 30) en forme de fourches. Le boîtier (23, 24) de chaque rotor (17, 18) est en sus muni d'une couronne dentée située sous la calotte (19, 20). Cette couronne engrène avec un pignon solidaire d'un arbre d'entraînement (31, 32) qui s'étend hors de ladite calotte en direction de la structure centrale (2). Chaque arbre d'entraînement (31, 32) est alors relié par un arbre intermédiaire (33, 34) à un carter de distribution (35) fixé sur la structure centrale (2). Celui-ci comporte un arbre d'entrée pouvant être relié par des arbres de transmission à un arbre de prise de force situé sur le tracteur.

Dans le boîtier (23, 24) de chaque rotor (17, 18) est logée une came qui commande les bras porte-outils (25, 26). Cette came est fixée sur la partie de l'axe support (21, 22) qui traverse le boîtier (23, 24). Elle comporte une gorge dans laquelle se déplacent des galets solidaires des bras porte-outils (25, 26). Sur la partie de chaque axe support (21, 22) qui s'étend sous le boîtier (23, 24) est fixée une console (36, 37). Chacune de celles-ci porte une traverse (38, 39) avec deux roulettes (40, 41 et 42, 43) reposant sur le sol durant le travail. Chacune de ces roulettes (40 à 43) est montée sur une colonne (44 à 47) articulée sur la traverse (38, 39) correspondante par l'intermédiaire d'un axe sensiblement vertical (48 à 51). Chaque colonne (44 à 47) possède une patte (52) sensiblement horizontale. Les pattes (52) des colonnes (44, 45 ou 46, 47) des deux roulettes (40, 41 ou 42, 43) situées sous un même rotor (17 ou 18) sont dirigées dans la même direction et sont reliées entre elles au moyen d'une tringle (53, 54). Chacune de ces tringles (53, 54) porte à peu près en son milieu une plaque d'arrêt (55, 56) munie de deux orifices de blocage légèrement espacés l'un de l'autre. Sur chaque traverse (38, 39) est en sus prévu un dispositif de verrouillage (57, 58). Chacun de ces dispositifs comprend une broche qui est déplaçable longitudinalement dans un fourreau et qui est munie d'un levier de manoeuvre. Dans la position de travail en ligne droite, la broche se situe entre les deux orifices de blocage de la plaque d'arrêt (55, 56) correspondante. Elle peut être introduite dans l'un ou l'autre desdits orifices de blocage en vue d'orienter les roulettes (40, 41 ou 42, 43) qui sont situées sous le même rotor (17 ou 18) dans une position inclinée par rapport à la direction d'avancement (A) de la machine. Ces roulettes (40, 41 ou 42, 43) peuvent ainsi être orientées vers la structure centrale (2) ou vers l'extérieur et former des angles (α) d'environ 20° à 30° avec la direction d'avancement (A).

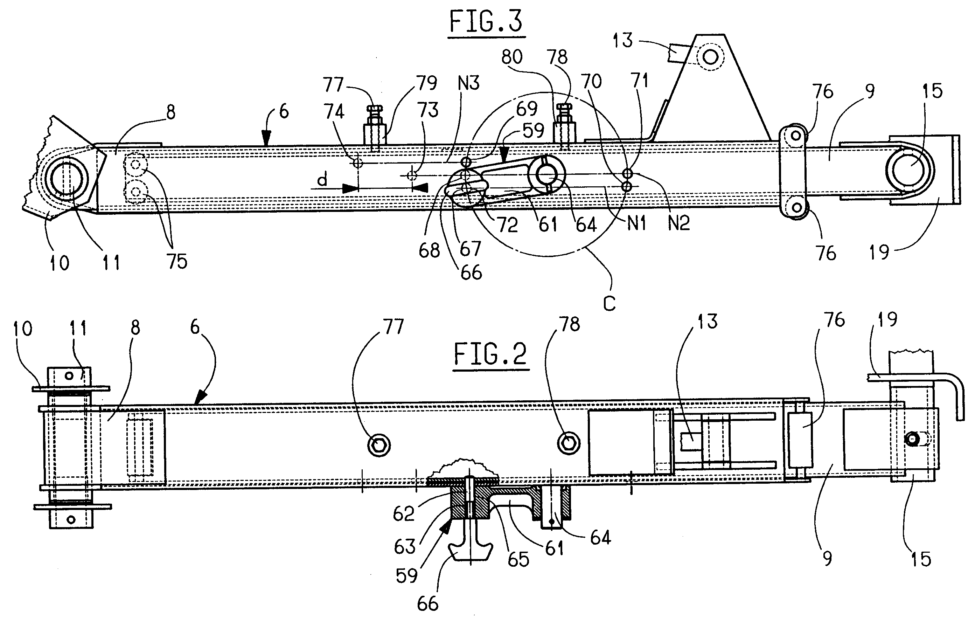

On voit notamment sur les figures 2 et 3 qu'un sélecteur de position (59, 60) est prévu sur chaque bras téléscopique (6, 7). Chaque sélecteur (59, 60) se compose d'un levier (61) et d'une broche (62) qui est poussée par un ressort (63). Ce levier (61) est articulé sur un pivot (64) solidaire de la partie fixe (8) du bras (6, 7) correspondant. Ladite broche (62) est logée de manière à pouvoir être déplacée longitudinalement dans un alésage (65) prévu dans le levier (61). Elle est cylindrique et est entourée sur une partie de sa longueur par le ressort de pression (63). Celui-ci la pousse constamment en direction du bras téléscopique (6, 7). Enfin, elle comporte à son extrémité la plus éloignée dudit bras téléscopique une poignée de manoeuvre (66).

Cette broche (62) peut être déplacée avec le levier (61) autour du pivot d'articulation (64) de ce dernier. Comme cela ressort de la figure 3, ce déplacement a lieu sur un cercle (C).

La partie fixe (8) de chaque bras téléscopique (6, 7) comporte cinq trous de sélection (67 à 71) dont le diamètre est légèrement supérieur à celui de la broche (62). Ces trous (67 à 71) sont disposés sur le cercle (C) précité et ce, sur trois niveaux (N1, N2, N3) différents. Sur les deux niveaux inférieurs (N1 et N2) sont prévus deux trous de sélection, soit un de chaque côté du pivot (64) du sélecteur (59 ou 60).

La partie mobile (9) de chaque bras téléscopique (6, 7) comporte trois trous d'arrêt (72, 73, 74) dont le diamètre est sensiblement égal à celui des trous de sélection (67 à 71). Ces trous d'arrêt (72 à 74) se situent sur les niveaux (N1, N2, N3) à raison d'un par niveau. La distance (d) entre ces trous d'arrêt est égale à un tiers du diamètre du cercle (C).

Chacun de ces trous d'arrêt (72 à 74) peut être amené dans le prolongement du ou des trous de sélection (67 à 71) prévus sur le même niveau (N1, N2 ou N3). La broche (62) du sélecteur (59 ou 60) peut alors s'engager dans le trou de sélection et le trou d'arrêt qui sont alignés en vue d'arrêter la partie mobile (9) par rapport à la partie fixe (8). Dans l'exemple représenté, la disposition des trous d'arrêt (72 à 74) et des trous de sélection (67 à 71) est telle que l'on peut arrêter la partie mobile (9) dans cinq positions. La différence entre chaque position est égale à la distance (d) entre les trous d'arrêt (72 à 74).

Il ressort également des figures 2 et 3 que la partie mobile (9) de chaque bras téléscopique (6, 7) est guidée dans la partie fixe (8) au moyen de rouleaux (75 et 76). La partie mobile (9) comporte deux rouleaux (75) à son extrémité située dans la partie fixe (8). Cette dernière comporte également deux rouleaux (76) à son extrémité la plus éloignée de la structure centrale (2).

Sur la partie fixe (8) de chaque bras téléscopique (6, 7) sont prévues deux vis de blocage (77 et 78) en vue de l'immobilisation de la partie mobile (9) correspondante. Chacune de ces vis (77, 78) est engagée dans une bague filetée (79, 80) solidaire de la partie fixe (8). Leur extrémité qui est vissée dans les bagues (79, 80) peut exercer une pression sur la partie mobile (9) en vue de l'immobiliser. Cette pression peut être obtenue en tournant chaque vis (77, 78) pour amener son extrémité directement en contact avec la partie mobile (9). Entre l'extrémité de chaque vis (77, 78) et la partie mobile (9) on peut aussi prévoir une pièce de pression intermédiaire qui peut coulisser dans la bague (79, 80) correspondante et qui épouse partiellement la forme de ladite partie mobile en vue d'améliorer le contact avec celle-ci.

Au travail, la machine peut être déplacée dans le sens (A) au moyen du tracteur. Les roulettes (40 à 43) des deux rotors (17 et 18) reposent alors sur le sol. Elles font suivre aux rotors (17 et 18) les dénivellations qu'elles rencontrent grâce aux axes d'articulation (11, 12, 15 et 16) des bras téléscopiques (6 et 7). Dans cette position, les axes supports (21 et 22) des rotors (17 et 18) sont sensiblement verticaux et leurs boîtiers (23 et 24) sont entraînés en rotation autour desdits axes supports dans les directions indiquées par les flèches (F et G). Cet entraînement est assuré à partir de l'arbre de prise de force du tracteur en passant par le carter de distribution (35), les arbres intermédiaires (33 et 34) et les pignons et couronnes dentées disposés sous les calottes (19 et 20) des rotors (17 et 18). Durant cette rotation, les galets qui sont reliés aux bras porte-outils (25 et 26) se déplacent dans la came de commande prévue dans le boîtier (23, 24) de chaque rotor (17 et 18). Cette came guide alors les galets de telle sorte qu'ils fassent pivoter les bras porte-outils (25 et 26) sur eux-mêmes lors de chaque révolution. De ce fait, lesdits bras font pivoter leurs outils (29 et 30), de telle sorte qu'ils ratissent les produits se trouvant au sol dans la partie avant de leur trajectoire -vu dans la direction (A)- et qu'ils déposent ces produits sous la forme d'un andain dans la partie de leur trajectoire qui est proche de la structure centrale (2). Dans ce cas, les deux rotors (17 et 18) rassemblent les produits vers le milieu de la machine et forment un seul andain lors de chaque passage.

Il est toutefois également possible d'utiliser deux rotors (17 et 18) qui tournent dans le même sens afin que chacun forme son propre andain.

Dans la position représentée sur les figures 2 et 3, la partie mobile (9) du bras téléscopique (6, 7) est engagée au maximum dans la partie fixe (8). La longueur du bras (6, 7) est alors réduite et les deux rotors (17 et 18) sont rapprochés l'un de l'autre. Dans cette position, la broche (62) du sélecteur (59, 60) s'étend à travers le trou de sélection (67) et le trou d'arrêt (72). En sus, la partie mobile est bloquée au moyen des vis (77 et 78).

Si l'utilisateur veut augmenter la distance entre les deux rotors (17 et 18), il définit la longueur de chaque bras téléscopique (6, 7) au moyen du sélecteur (59, 60). Pour ce faire, il retire la broche (62) des trous (67 et 72) et il la déplace avec le levier (61) autour du pivot (64). Il choisit alors le trou de sélection (68, 69, 70 ou 71) qui correspond à la longueur qu'il souhaite obtenir et y place la broche (62). L'extrémité de cette dernière bute alors contre la paroi de la partie mobile (9). Ensuite, il desserre les vis de blocage (77, 78) pour libérer la partie mobile (9) et il oriente les roulettes porteuses (40, 41 et 42, 43) de chaque rotor (17 et 18). Pour allonger les bras téléscopiques (6 et 7) il y a lieu de déplacer lesdites roulettes autour des axes d'articulation (48 à 51) de telle sorte qu'elles forment des angles α , compris de préférence entre 20° et 30° avec la direction d'avance (A) de la machine. Ces roulettes (40 à 43) sont maintenues dans ces positions inclinées par la broche de chaque dispositif de verrouillage (57, 58), qui est engagée dans un des orifices de blocage prévus dans la plaque d'arrêt (55, 56) correspondante. Comme cela est représenté sur la figure 1, les roulettes (40 à 43) des deux rotors (17, 18) sont divergentes. Ainsi, lorsque la machine est déplacée dans la direction (A), ces roulettes (40 à 43) s'écartent automatiquement de la structure centrale (2) et tirent les parties mobiles (9) hors des parties fixes (8) des bras (6, 7). Chaque partie mobile (9) glisse alors vers l'extérieur jusqu'à ce que son trou d'arrêt (72, 73 ou 74), qui se trouve au même niveau (N1, N2 ou N3) que la broche (62) du sélecteur (59 ou 60), arrive en face de cette broche. Celle-ci est alors poussée par son ressort (63) dans ledit trou d'arrêt et immobilise la partie mobile (9) dans la nouvelle position. Dès que les deux bras (6 et 7) de la machine ont atteint la longueur voulue, l'utilisateur resserre les vis de blocage (77 et 78) et ramène les roulettes (40 à 43) dans la direction d'avancement (A). On remarquera sur la figure 3 que chaque trou d'arrêt (72 ou 73) des niveaux (N1 et N2) peut être aligné avec deux trous de sélection (67 et 70, 68 et 71). Ceci permet d'augmenter les possibilités de réglage avec un nombre limité de trous d'arrêt. La partie mobile (9) de chaque bras (6, 7) peut ainsi être arrêtée dans cinq positions procurant chacune une modification de la longueur du bras (6, 7) dont la valeur est égale à la distance (d) entre les trous d'arrêt (72, 73 et 74).

Pour raccourcir les bras téléscopiques (6, 7) l'utilisateur doit procéder de la même manière que décrit ci-dessus, sauf en ce qui concerne l'orientation des roulettes (40 à 43). Celles-ci doivent être dirigées vers la structure centrale (2) de manière à ce qu'elles soient convergentes. Les angles qu'elles forment avec la direction d'avancement (A) sont à nouveau compris entre 20° et 30°. Elles sont également maintenues dans cette position au moyen des broches des dispositifs de verrouillage (57 et 58) qui sont engagées dans le second orifice de blocage de la plaque d'arrêt (55, 56) correspondante. Dans ce cas, dès que la machine est déplacée dans la direction (A), les roulettes (40 à 43) se rapprochent de la structure centrale (2). Elles poussent alors les parties mobiles (9) avec les rotors (17 et 18) dans les parties fixes (8) des bras (6 et 7) en vue de réduire la longueur de ces derniers. Dès que la position recherchée est atteinte, la broche (62) de chaque sélecteur (59, 60) immobilise automatiquement la partie mobile (9) de chaque bras (6, 7) et l'utilisateur n'a plus qu'à serrer les vis de blocage (77 et 78) et à remettre les roulettes (40 à 43) dans leur position normale de travail.

Le mode de réglage de la longueur des bras téléscopiques (6 et 7) a été décrit en considérant que la machine est déplacée en marche avant dans la direction (A). Il est toutefois également possible d'orienter les roulettes (40 à 43) dans les directions contraires à celles qui ont été décrites et de déplacer la machine en marche arrière pour régler ladite longueur.

Pour le transport, les deux bras téléscopiques (6 et 7) avec les rotors (17 et 18) sont relevés autour des axes d'articulation (11 et 12) au moyen des vérins hydrauliques (13 et 14). Ils occupent ainsi des positions pratiquement verticales afin que la largeur de la machine soit réduite. Il est également avantageux de raccourcir les bras téléscopiques (6 et 7) avant de les amener dans la position verticale en vue de limiter la hauteur de l'ensemble au transport.

Il est bien évident que l'invention n'est pas limitée au mode de réalisation tel que décrit ci-dessus et représenté sur les dessins annexés. Des modifications restent possibles, notamment en ce qui concerne la constitution des divers éléments ou par substitution d'équivalents techniques, sans pour autant sortir du domaine de protection défini dans les revendications.

## Revendications

1. Machine agricole comportant notamment un châssis porteur (1) composé d'une structure centrale (2) munie de premières roulettes (4, 5) et de bras télescopiques (6, 7) qui s'étendent de part et d'autre de ladite structure (2) et dont les longueurs sont définies au moyen de verrous (77, 78), chacun de ces bras (6, 7) portant à son extrémité la plus éloignée de la structure centrale (2) au moins un rotor d'andainage (17, 18) qui est entraîné en rotation durant le travail autour d'un axe (21, 22) dirigé vers le haut et qui repose sur le sol au moyen de secondes roulettes (40 à 43), caractérisée par le fait que les secondes roulettes (40, 41 et 42, 43) de chaque rotor (17 ou 18) peuvent être orientées et bloquées dans au moins deux positions inclinées de part et d'autre par rapport à la direction d'avancement (A) de la machine et que chaque bras télescopique (6 ou 7) comporte un sélecteur (59, 60) de plusieurs positions, qui arrête automatiquement l'allongement ou le raccourcissement dudit bras lorsqu'il atteint la longueur recherchée.

2. Machine selon la revendication 1, caractérisée par le fait que les roulettes (40, 41 et 42, 43) de chaque rotor (17 ou 18) sont montées sur des colonnes (44, et 46, 47) articulées sur une traverse (38, 39) qui est solidaire de l'axe support (21, 22) et qui porte un dispositif de verrouillage (57, 58) pour bloquer lesdites roulettes (40 à 43) dans des positions inclinées par rapport au sens d'avancement (A).

3. Machine selon la revendication 2, caractérisée par le fait que les colonnes (44, 45 et 46, 47) des roulettes (40, 41 et 42, 43) de chaque rotor (17 ou 18) sont reliées entre elles au moyen d'une tringle (53, 54) munie chacune d'une plaque d'arrêt (55, 56) avec des orifices de blocage pour le dispositif de verrouillage (57, 58).

4. Machine selon l'une quelconque des revendications 1 à 3, caractérisée par le fait que dans les positions inclinées les roulettes (40, 41, 42, 43) forment des angles α d'environ 20° à 30° avec la direction d'avancement (A).

5. Machine selon la revendication 1, caractérisée par le fait que chaque sélecteur de position (59, 60) se compose d'un levier (61) qui est articulé sur la partie fixe (8) de chaque bras (6, 7) au moyen d'un pivot (64) et qui est muni d'une broche (62) poussée par un ressort (63).

6. Machine selon la revendication 5, caractérisée par le fait que la partie fixe (8) de chaque bras (6, 7) comporte des trous de sélection (67 à 71) disposés sur plusieurs niveaux (N1, N2, N3) sur un cercle (C) qui correspond à la trajectoire sur laquelle la broche (62) du sélecteur de position (59, 60) correspondant est déplaçable autour du pivot (64).

7. Machine selon la revendication 6, caractérisée par le fait que la partie fixe (8) de chaque bras (6, 7) comporte cinq trous de sélection (67 à 71) disposés sur trois niveaux (N1, N2, N3), les deux niveaux inférieurs (N1, N2) comportant chacun deux trous de sélection disposés de part et d'autre du pivot (64) du sélecteur (59, 60) correspondant.

8. Machine selon la revendication 6 ou 7, caractérisée par le fait que la partie mobile (9) de chaque bras (6, 7) comporte un trou d'arrêt (72, 73, 74) sur chacun des niveaux (N1, N2 et N3) sur lesquels sont disposés les trous de sélection (67 à 71).

9. Machine selon la revendication 8, caractérisée par le fait que la distance (d) entre les trous d'arrêt (72, 73 et 74) est égale à un tiers du diamètre du cercle (C).

10. Machine selon l'une quelconque des revendications précédentes, caractérisée par le fait que la partie mobile (9) de chaque bras (6, 7) est guidée dans la partie fixe (8) correspondante au moyen de rouleaux (75 et 76).

11. Machine selon l'une quelconque des revendications précédentes, caractérisée par le fait que la partie fixe (8) de chaque bras (6, 7) comporte au moins une vis de blocage (77, 78).

## Patentansprüche

1. Landmaschine, die insbesonders ein Traggestell (1) umfaßt, das zusammengesetzt ist aus einem mit ersten Rädern (4, 5) versehenen zentralen Bauteil (2) und Teleskoparmen (6, 7), die sich zu beiden Seiten des Bauteils (2) erstrecken und deren Längen mittels Riegeln(77, 78) begrenzt werden, wobei jeder dieser Arme (6, 7) an seinem vom zentralen Bauteil (2) am weitesten entfernten Ende zumindest einen Schwadrotor (17, 18) trägt, der während des Betriebs um eine aufrechtstehende Achse (21, 22) in Drehung versetzt wird und der auf dem Boden mittels zweiter Räder (40 bis 43) aufruht, dadurch gekennzeichnet, daß die zweiten Räder (40, 41 und 42, 43) jedes Rotors (17 oder 18) in zumindest zwei nach beiden Seiten in bezug auf die Vorschubrichtung (A) der Maschine schrägen Stellungen ausgerichtet und blockiert werden können und daß jeder Teleskoparmn (6 oder 7) eine Auswahlvorrichtung (59, 60) für mehrere Positionen aufweist, die die Verlängerung oder Verkürzung des Armes automatisch beendet, wenn er die gewünschte Länge erreicht.

2. Maschine nach Anspruch 1, dadurch gekennzeichnet, daß die Räder (40, 41 und 42, 43) jedes Rotors (17 oder 18) auf Stützen (44, 45 und 46, 47) montiert sind, die an einer mit der Tragachse (21, 22) fest verbundenen Traverse (38, 39) angelenkt sind, die eine Verriegelungsvorrichtung (57, 58) zum Fixieren der Räder (40 bis 43) in, bezogen auf die Vorschubrichtung (A), schrägen Stellungen trägt.

3. Maschine nach Anspruch 2, dadurch gekennzeichnet, daß die Stützen (44, 45 und 46, 47) der Räder (40, 41 und 42, 43) jedes Rotors (17 oder 18) miteinander durch eine Stange (53, 54) verbunden sind, die jeweils mit einer mit Blockierlöchern für die Verriegelungsvorrichtung (57, 58) versehenen Arretierplatte (55, 56) versehen ist.

4. Maschine nach irgendeinem der Ansprüche 1 bis 3, dadurch gekennzeichnet, daß die Räder (40, 41 und 42, 43) in den schrägen Stellungen Winkel α von etwa 20° bis 30° mit der Vorschubrichtung (A) bilden.

5. Maschine nach Anspruch 1, dadurch gekennzeichnet, daß jede Positionsauswahlvorrichtung (59, 60) aus einem Hebel (61), der am festen Teil (8) jedes Armes (6, 7) mittels eines Schwenkzapfens (64) angelenkt ist und der mit einem von einer Feder (63) beaufschlagten Stift (62) versehen ist, besteht.

6. Maschine nach Anspruch 5, dadurch gekennzeichnet, daß der feste Teil (8) jedes Armes (6, 7) Auswahllöcher (67 bis 71) umfaßt, die auf mehreren Niveaus (N1, N2, N3) auf einem Kreis (C) angeordnet sind, der der Umlaufbahn entspricht, auf welcher der Stift (62) der entsprechenden Positionsauswahlvorrichtung (59, 60) um den Schwenkzapfen (64) bewegbar ist.

7. Maschine nach Anspruch 6, dadurch gekennzeichnet, daß der feste Teil (8) jedes Armes (6, 7) fünf Auswahllöcher (67 bis 71) aufweist, die auf drei Niveaus (N1, N2, N3) angeordnet sind, wobei die beiden unteren Niveaus (N1, N2) jeweils zwei Auswahllöcher aufweisen, die zu beiden Seiten des Schwenkzapfens der entsprechenden Auswahlvorrichtung (59, 60) angeordnet sind.

8. Maschine nach Anspruch 6 oder 7, dadurch gekennzeichnet, daß der mobile Teil (9) jedes Armes (6, 7) je ein Arretierloch auf jedem Niveau (N1, N2 und N3), auf dem die Auswahllöcher (67 bis 71) angeordnet sind, aufweist.

9. Maschine nach Anspruch 8, dadurch gekennzeichnet, daß der Abstand (d) zwischen den Arretierlöchern (72, 73 und 74) gleich einem Drittel des Durchmessers des Kreises (C) ist.

10. Maschine nach irgendeinem der vorhergehenden Ansprüche, dadurch gekennzeichnet, daß der mobile Teil (9) jedes Armes (6, 7) im entsprechenden festen Teil (8) mittels Rollen (75 und 76) geführt ist.

11. Maschine nach irgendeinem der vorhergehenden Ansprüche, dadurch gekennzeichnet, daß der feste Teil (8) jedes Armes (6, 7) zumindest eine Blockierschraube (77, 78) aufweist.

## Claims

1. Agricultural machine especially comprising a carrier frame (1) formed by a central structure (2) provided with first wheels (4, 5) and telescopic arms (6, 7) extending on either side of the said structure (2) and the lengths of which are defined by means of locks (77, 78), each of these arms (6, 7) carrying at its end most remote from the central structure (2) at least one rotor (17, 18) which is driven in rotation during work around an upwardly directed axis (21, 22) and rests on the soil by means of second wheels (40 to 43), characterised in that the second wheels (40, 41 and 42, 43) of each rotor (17 or 18) can be adjusted and locked in at least two positions inclined on either side with regard to the direction of advance (A) of the machine and that each telescopic arm (6 or 7) comprises a selector (59, 60) of several positions, which automatically blocks the elongation or the shortening of said arm when it reaches the desired position.

2. Machine according to claim 1, characterised in that the wheels (40, 41 and 42, 43) of each rotor (17 or 18) are mounted on columns (44, 45 and 46, 47) which are articulated on a cross-beam (38, 39) rigidly attached to the support axis (21, 22) and provided with a locking device (57, 58) for the locking of said wheels (40 to 43) in positions inclined with regard to the direction of advance (A).

3. Machine according to claim 2, characterised in that the columns (44, 45 and 46, 47) of the wheels (40, 41 and 42, 43) of each rotor (17 or 18) are connected to one another by means of a rod (53, 54) each provided with a stop plate (55, 56) with locking holes for the locking device (57, 58).

4. Machine according to anyone of claims 1 to 3, characterised in that in the inclined positions the wheels (40, 41 and 42, 43) form angles α of about 20° to 30° with the direction of advance (A).

5. Machine according to claim 1, characterised in that each position selector (59, 60) is formed by a lever (61) which is articulated on the fixed part (8) of each arm (6, 7) by means of a pivot (64) and which is provided with a pin (62) pushed by a spring (63).

6. Machine according to claim 5, characterised in that the fixed part (8) of each arm (6, 7) comprises selection holes (67 to 71) arranged on several levels (N1, N2, N3) on a circle (C) which corresponds to the trajectory on which the pin (62) of the corresponding position selector (59, 60) is movable around the pivot (64).

7. Machine according to claim 6, characterised in that the fixed part (8) of each arm (6, 7) comprises five selection holes (67 to 71) arranged on three levels (N1, N2, N3), the two lower levels (N1, N2) each comprising two selection holes arranged on either side of the pivot (64) of the corresponding selector (59, 60).

8. Machine according to claim 6 or 7, characterised in that the mobile part (9) of each arm (6, 7) comprises a stop hole (72, 73, 74) at each of the levels (N1, N2 and N3) on which the selection holes (67 to 71) are arranged.

9. Machine according to claim 8, characterised in that the distance (d) between the stop holes (72, 73 and 74) is equal to one third of the diameter of the cercle (C).

10. Machine according to anyone of the preceding claims, characterised in that the mobile part (9) of each arm (6, 7) is guided in the corresponding fixed part (8) by means of rollers (75 and 76).

11. Machine according to anyone of the preceding claims, characterised in that the fixed part (8) of each arm (6, 7) comprises at least one lock screw (77, 78).
